# FASCICULE DE BREVET EUROPEEN

(11) **EP 1 121 284 B1**
(45) Date de publication et mention de la délivrance du brevet: **02.08.2006**
(21) Numéro de dépôt: 99949069.1
(22) Date de dépôt: 18.10.1999
(51) Int. Cl.: B60T 13/567, B60T 13/565

(54) **DISPOSITIF DE FREINAGE RENFORCE FRAGILISE AU CHOC**
VERSTÄRKTE, BEI AUFPRALL ZERBRECHLICHE BREMSVORRICHTUNG
REINFORCED IMPACT-EMBRITTLED BRAKING DEVICE

(30) Priorité: 20.10.1998 FR 9813187
(43) Date de publication de la demande: 08.08.2001
(73) Titulaire: Bosch Systemes de Freinage, 93700 Drancy (FR)
(72) Inventeur: LEBOISNE, Cédric, F-75011 Paris (FR)
(74) Mandataire: Hurwic, Aleksander Wiktor
(86) Numéro de dépôt international: PCT/FR1999/002535
(87) Numéro de publication internationale: WO 2000/023307

(56) Documents cités:
- DE-A- 4 202 820
- DE-A- 19 524 503
- DE-C- 4 332 611

## Description

La présente invention concerne un dispositif de freinage pour véhicule, comprenant un servomoteur pneumatique d'assistance, un maître-cylindre, et un écrou de fixation, le servomoteur comprenant notamment une enveloppe rigide, une cloison mobile et un tirant, l'enveloppe comprenant des coquilles avant et arrière formant des parois respectives pour des chambres avant et arrière définies à l'intérieur de l'enveloppe et séparées l'une de l'autre par la cloison mobile, le tirant traversant les coquilles avant et arrière suivant une direction axiale pour les relier entre elles, et présentant une extrémité avant filetée, externe à la chambre avant, et un épaulement sur lequel la coquille avant vient en appui à l'intérieur de la chambre avant, le maître-cylindre comportant une bride percée d'un orifice traversé par l'extrémité avant du tirant.

Des servomoteurs de ce type sont connus dans l'art antérieur, et un exemple en est donné dans le document de brevet DE - 2 830 262.

L'invention présentée repose sur la mise en évidence du fait que les servomoteurs à tirants, bien qu'offrant l'avantage de montrer une rigidité globale très satisfaisante pour une épaisseur relativement faible de l'enveloppe, présentent aussi l'inconvénient de pouvoir transmettre vers le conducteur des efforts très importants en cas de choc frontal accidentel du véhicule.

Le but de l'invention consiste précisément à éviter la transmission vers le conducteur des efforts d'impact reçu par un dispositif de freinage utilisant un servomoteur à tirants.

A cette fin, le dispositif de l'invention, par ailleurs conforme au préambule ci-dessus, est essentiellement caractérisé en ce que l'écrou de fixation présente un fût engagé dans l'orifice de la bride et vissé sur l'extrémité avant du tirant, et une collerette appuyant la bride contre la coquille avant, en ce que le fût de l'écrou et l'épaulement du tirant ont des première et seconde sections respectives en regard l'une de l'autre, et en ce que la première section recouvre intégralement la seconde section.

Grâce à cet agencement, un choc frontal reçu par le maître-cylindre est absorbé par enfoncement de la coquille avant, au lieu d'être transmis au tablier par le tirant, comme c'était le cas dans l'art antérieur.

La coquille avant peut être pincée entre le fût et l'épaulement du tirant.

Le tirant peut en outre être de forme tubulaire, la coquille avant pouvant elle-même être sertie sur l'épaulement de ce tirant.

D'autres caractéristiques et avantages de l'invention ressortiront clairement de la description qui en est faite ci-après, à titre indicatif et nullement limitatif, en référence aux dessins, dans lesquels :
- La figure 1 est une vue en coupe partielle d'un dispositif de freinage connu utilisant un servomoteur à tirants;
- La figure 2 est une vue en coupe des détails structurels caractéristiques d'un dispositif de freinage conforme à l'invention, correspondant à un premier mode de réalisation, et observés avant un choc;
- La figure 3 est une vue en coupe des détails structurels caractéristiques d'un dispositif de freinage conforme à l'invention, correspondant à un premier mode de réalisation, et observés après un choc;
- La figure 4 est une vue en coupe des détails structurels caractéristiques d'un dispositif de freinage conforme à l'invention, correspondant à un second mode de réalisation, et observés avant un choc;
- La figure 5 est une vue en coupe des détails structurels caractéristiques d'un dispositif de freinage conforme à l'invention, correspondant à un second mode de réalisation, et observés après un choc;

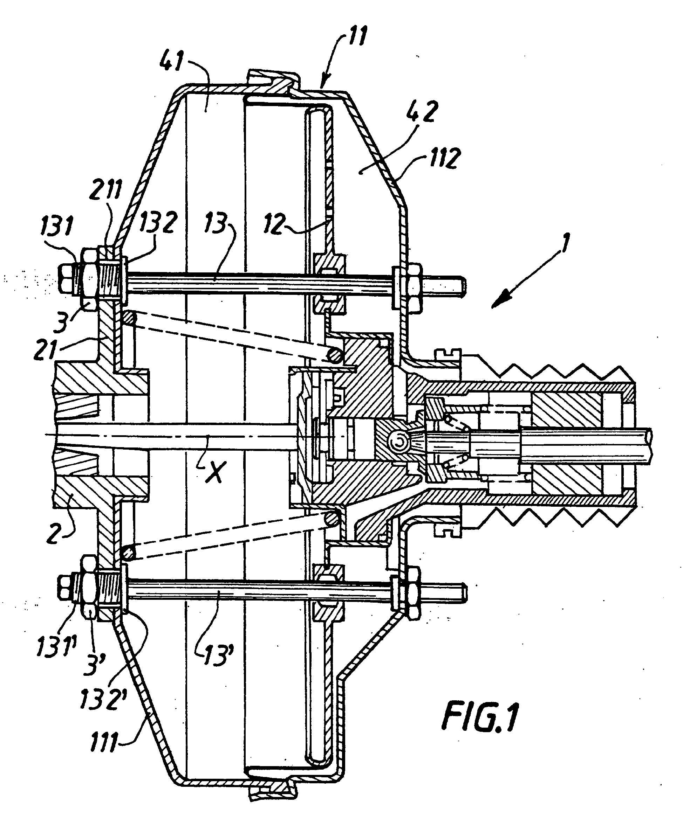

Comme le montre la figure 1, l'invention concerne de façon générale un dispositif de freinage pour véhicule, comprenant essentiellement un servomoteur pneumatique d'assistance 1, un maître-cylindre 2 et un écrou de fixation 3.

Le servomoteur 1 comprend notamment lui-même une enveloppe rigide 11, une cloison mobile 12 et un tirant tel que 13.

En réalité, un servomoteur à tirants comprend généralement plusieurs tirants tels que 13 et 13', homologues au tirant 13, et qui seront, ainsi que leur environnement, implicitement décrits en même temps que le tirant 13 et son environnement.

L'enveloppe 11 est constituée d'une coquille avant 111 et d'une coquille arrière 112, qui forment des parois respectives pour des chambres avant 41 et arrière 42 définies à l'intérieur de l'enveloppe 11 et séparées l'une de l'autre par la cloison mobile 12.

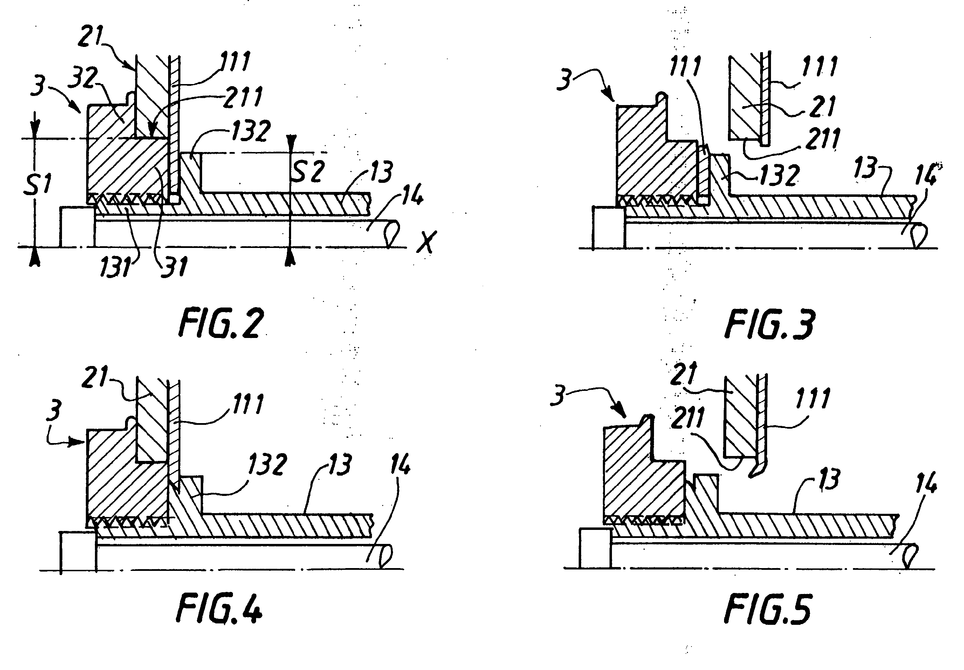

Le tirant 13 traverse les coquilles avant 111 et arrière 112 suivant une direction axiale X pour les relier entre elles, et peut être constitué soit d'une vis pleine comme le montre la figure 1, soit d'un tube lui-même traversé par une vis 14, comme le montrent les figures 2 à 5.

Dans tous les cas, le tirant 13 présente une extrémité avant 131 filetée, externe à la chambre avant 41, ainsi qu'un épaulement 132 sur lequel la coquille avant 111 vient en appui à l'intérieur de la chambre avant 41.

Le maître-cylindre 2 comporte une bride de fixation 21 percée d'un orifice 211 traversé par l'extrémité avant 131 du tirant 13.

L'écrou de fixation 3 présente d'une part un fût 31 engagé dans l'orifice 211 de la bride et vissé sur l'extrémité avant 131 du tirant 13, et d'autre part une collerette 32 propre à appuyer la bride 21 contre la coquille avant 111, le fût 31 de l'écrou 3 et l'épaulement 132 du tirant 13 présentant des première et seconde sections respectives S1, S2, en regard l'une de l'autre.

Selon l'invention, la section S1 du fût 31 de l'écrou 3 recouvre intégralement la section S2 de l'épaulement 132 du tirant 13.

Les figures 2 et 3 illustrent l'intérêt de l'invention pour un premier mode de réalisation, dans lequel la coquille avant 111 est pincée entre le fût 31 de l'écrou 3 et l'épaulement 132 du tirant 13.

Dans ce cas, un choc frontal sur le maître-cylindre 2 a pour effet de cisailler la tôle dont la coquille avant 111 est formée, de sorte que le maître-cylindre 2 peut pénétrer dans la chambre avant 41 sans rencontrer le tirant 13, évitant ainsi de lui transmettre un effort axial intense, comme c'est au contraire le cas dans l'art antérieur.

L'intérêt de l'invention est également illustré, par les figures 4 et 5, pour un second mode de réalisation, dans lequel la coquille avant 111 est sertie sur l'épaulement 132 du tirant 13.

Dans ces conditions, un choc frontal sur le maître-cylindre 2 a pour effet de dessertir de l'épaulement 132 la tôle dont la coquille avant 111 est formée, le maître-cylindre 2 pouvant, dans ce cas également, pénétrer dans la chambre avant 41 sans interférer avec le tirant 13.

## Revendications

1. Dispositif de freinage pour véhicule, comprenant un servomoteur pneumatique d'assistance (1), un maître-cylindre (2) et un écrou de fixation (3), le servomoteur (1) comprenant notamment une enveloppe rigide (11), une cloison mobile (12) et un tirant (13), l'enveloppe (11) comprenant des coquilles avant (111) et arrière (112) formant des parois respectives pour des chambres avant (41) et arrière (42) définies à l'intérieur de l'enveloppe (11) et séparées l'une de l'autre par la cloison mobile (12), le tirant (13) traversant les coquilles avant (111) et arrière (112) suivant une direction axiale (X) pour les relier entre elles, et présentant une extrémité avant (131) filetée, externe à la chambre avant (41), et un épaulement (132) sur lequel la coquille avant (111) vient en appui à l'intérieur de la chambre avant (41), le maître-cylindre (2) comportant une bride (21) percée d'un orifice (211) traversé par l'extrémité avant (131) du tirant (13), **caractérisé en ce que** l'écrou de fixation (3) présente un fût (31) engagé dans l'orifice (211) de la bride et vissé sur l'extrémité avant (131) du tirant (13), et une collerette (32) appuyant la bride (21) contre la coquille avant (111), **en ce que** le fut (31) de l'écrou et **en ce que** l'épaulement (132) du tirant ont des premières et secondes sections (S1, S2) respectives en regard l'une de l'autre, et **en ce que** la première section (S1) recouvre intégralement la seconde section (S2), de manière à ce que, en cas de choc frontal sur le maître-cylindre (2), il puisse pénétrer dans la chambre avant (41) sans rencontrer le tirant (13) évitant de transmettre un effort axial intense audit tirant (13).

2. Dispositif de freinage pour véhicule suivant la revendication 1, **caractérisé en ce que** la coquille avant (111) est pincée entre le fût (31) de l'écrou (3) et l'épaulement (132) du tirant (13).

3. Dispositif de freinage suivant la revendication 1 ou 2, **caractérisé en ce que** le tirant (13) est de forme tubulaire.

4. Dispositif de freinage suivant la revendication 1 et 3, **caractérisé en ce que** la coquille avant (111) est sertie sur l'épaulement du tirant 13.

## Claims

1. Braking device for a vehicle, comprising a pneumatic booster (1), a master cylinder (2) and a securing nut (3), the booster (1) comprising in particular a rigid casing (11), a moving partition (12) and a through-bolt (13), the casing (11) comprising a front shell (111) and a rear shell (112) forming respective walls for a front chamber (41) and a rear chamber (42) which are defined inside the casing (11) and separated from one another by the moving partition (12), the through-bolt (13) passing through the front shell (111) and rear shell (112) in an axial direction (X) in order to join these together, and having a threaded front end (131) outside the front chamber (41) and a shoulder (132) on which the front shell (111) rests inside the front chamber (41), the master cylinder (2) comprising a flange (21) pierced with a hole (211) through which the front end (131) of the through-bolt (13) passes, **characterized in that** the securing nut (3) has a barrel (31) engaged in the hole (211) in the flange and screwed onto the front end (131) of the through-bolt (13), and a collar (32) pressing the flange (21) against the front shell (111), **in that** the barrel (31) of the nut and **in that** the shoulder (132) of the through-bolt have first and second respective sections (S1, S2) facing one another, and **in that** the first section (S1) completely covers the second section (S2) such that, in the event of frontal impact on the master cylinder (2), the latter can penentrate the front chamber (41) without encountering the through-bolt (13), avoiding transmitting an intense axial force to the said through-bolt (13).

2. Braking device for a vehicle according to Claim 1, **characterized in that** the front shell (111) is trapped between the barrel (31) of the nut (3) and the shoulder (132) of the through-bolt (13).

3. Braking device according to Claim 1 or 2, **characterized in that** the through-bolt (13) is of tubular shape.

4. Braking device according to Claims 1 and 3, **characterized in that** the front shell (111) is crimped to the shoulder (132) of the through-bolt (13).

## Patentansprüche

1. Bremsvorrichtung für ein Kraftfahrzeug, mit einem pneumatischen Unterstützungsservomotor (1), einem Hauptzylinder (2) und einer Befestigungsmutter (3), wobei der Servomotor (1) insbesondere ein starres Gehäuse (11), eine bewegliche Wand (12) und eine Zugstange (13) aufweist, wobei das Gehäuse (11) eine vordere Schale (111) und eine hintere Schale (112) aufweist, die jeweilige Wände für eine vordere Kammer (41) und eine hintere Kammer (42) bilden, welche im Gehäuse (11) definiert und durch die bewegliche Wand (12) voneinander getrennt sind, wobei die Zugstange (13) die vordere Schale (111) und die hintere Schale (112) gemäß einer axialen Richtung (X) durchquert, um sie miteinander zu verbinden, und ein vorderes Gewindeende (131), das außerhalb der vorderen Kammer (41) angeordnet ist, und einen Absatz (132) aufweist, auf dem die vordere Schale (111) innerhalb der vorderen Kammer (41) in Anlage gelangt, wobei der Hauptzylinder (2) einen Bügel (21) aufweist, der von einer Öffnung (211) durchsetzt ist, durch die das vordere Ende (131) der Zugstange (13) verläuft, **dadurch gekennzeichnet, dass** die Befestigungsmutter (3) einen Schaft (31), der in die Öffnung (211) des Bügels eingreift und an das vordere Ende (131) der Zugstange (13) geschraubt ist, und einen Kragen (32) aufweist, der den Bügel (21) gegen die vordere Schale (111) drückt, dass der Schaft (31) der Mutter und der Absatz (132) der Zugstange einen ersten bzw. einen zweiten Abschnitt (S1, S2) aufweisen, die einander gegenüberliegen, und dass der erste Abschnitt (S1) den zweiten Abschnitt (S2) vollständig bedeckt, so dass bei einem Frontalaufprall auf den Hauptzylinder (2) dieser in die vordere Kammer (41) dringen kann, ohne auf die Zugstange (13) zu treffen, wodurch die Übertragung einer intensiven axialen Kraft auf die Zugstange (13) vermieden wird.

2. Bremsvorrichtung für ein Kraftfahrzeug nach Anspruch 1, **dadurch gekennzeichnet, dass** die vordere Schale (111) zwischen dem Schaft (31) der Mutter (3) und dem Absatz (132) der Zugstange (13) geklemmt ist.

3. Bremsvorrichtung nach Anspruch 1 oder 2, **dadurch gekennzeichnet, dass** die Zugstange (13) röhrenförmig ist.

4. Bremsvorrichtung nach Anspruch 1 und 3, **dadurch gekennzeichnet, dass** die vordere Schale (111) auf den Absatz der Zugstange (13) gefalzt ist.
